# EUROPEAN PATENT APPLICATION

(11) **EP 2 216 303 A1**
(43) Date of publication of application: **11.08.2010**
(21) Application number: 09180179.5
(22) Date of filing: 21.12.2009
(51) Int. Cl.: C03C 15/00, C03C 17/00, C03C 17/22

(54) **Heat Treatable Magnesium Fluoride Inclusive Coatings, Coated Articles Including Heat Treatable Magnesium Fluoride Inclusive Coatings, and Methods of Making the Same**

(30) Priority: 22.01.2009 US 320292
(71) Applicant: GUARDIAN INDUSTRIES CORP., Auburn Hills, Michigan 48326-1714 (US)
(72) Inventor: Sharma, Pramod K., Ann Arbor, Michigan, 48105 (US); Vanderploeg, John A., Zeeland, Michigan, 49464 (US); Fulton, Kevin R., Howell, Michigan, 48843 (US)
(74) Representative: Hess, Peter K. G.

(57) **Abstract**

Certain example embodiments of this invention relate to optical coatings including magnesium fluoride and/or organosilane based coatings, which may be disposed on textured or un-textured substrates (e.g., glass substrates). Surprisingly and unexpectedly, the magnesium fluoride coatings are temperable, while the organosilane based coatings are low temperature heat treatable. Additionally, surprisingly and unexpectedly, such coatings on textured and un-textured glass surfaces result in superior transmission increases.

## Description

### Field of the Invention

Certain example embodiments of this invention relate to transmission enhancing optical coatings provided on surfaces of substrates. More particularly, certain example embodiments of this invention relate to optical coatings comprising magnesium fluoride and/or organosilane based coatings, which may be disposed on substrates (which may be textured, e.g., via chemical agents) such as glass substrates. Surprisingly and unexpectedly, the magnesium fluoride coatings are temperable (e.g., at temperatures of at least about 580 degrees C, more preferably at least about 600 degrees C, and still more preferably at least about 625 degrees C), while the organosilane based coatings are low temperature heat treatable (e.g., at temperatures of about 250 degrees C). Additionally, surprisingly and unexpectedly, such coatings on textured and un-textured glass surfaces result in superior transmission increases.

### Background and summary of Example Embodiments of the invention

Glare can be thought of as a loss in visual performance and visibility, annoyance, or discomfort produced by a luminance in the visual field greater than the luminance to which the eyes are adapted. The problems caused by glare from reflective surfaces such as glass (reflection glare) are well documented and commonly experienced. For example, incident light reflected from the glass surface of a television screen, video display terminal, cathode ray tubes (CRTs), picture frames, etc., reduces the visibility of the information or image to be viewed. This can cause fatigue, eyestrain, headache, and/or other like problems for those who use the device for even modest periods of time. Cover glass for photographs, art work, and the like suffers from similar drawbacks.

A number of attempts have been taken to solve these and/or other related problems, and these attempts have met with varying degrees of success. For example, frosted glass is one typical light diffusion material that typically is made by acid etching a glass surface. However, frosted glass typically cannot be used in applications where high clarity is required. Another option involves using a thin plastic filter. However, such plastic filter typically are easily damaged.

Glare reducing coatings also have been used. For example, U.S. Patent No. 4,168,332 discloses a non-glare abrasion resistant coating for glass or plastic that protects and overlies artwork. The coating is made by spraying a polymerizable solution comprising an epoxy prepolymer of an epoxy terminated silane. U.S. Patent No. 3,697,277 discloses a non-glare reflective photographic print having a matte-surface polyester film of, for example, poly (ethylene) terephthalate, permanently bonded to the photographic emulsion. U.S. Patent No. 3,679,451 discloses coatings for decreasing reflected images from the surface of a transparent sheet used for display, with the coatings being a mixture of organic and inorganic polymers. The entire contents of each of the aforesaid patents are hereby incorporated herein by reference. Unfortunately, the coatings described in these patents are limited by their curing temperature, e.g., dye to their polymeric structure.

Thus, it will be appreciated that there is a need in the art for an antiglare coating that can survive at high temperatures (e.g., can be baked when directly or indirectly on the glass). The high temperatures may be used during heat treating including, for example, thermal tempering and/or heat strengthening. It will be appreciated that there is a need in the art for corresponding coated articles and methods of making the same.

In certain example embodiments of this invention, a method of making a coated article is provided. A glass substrate is provided. Using an acid, at least one surface of the glass substrate is diffusion etched so as to create a textured surface on the glass substrate. A magnesium fluoride inclusive coating is disposed, directly or indirectly, on the textured surface of the glass substrate. The glass substrate having the magnesium fluoride coating disposed thereon is heat treated by exposing the glass substrate having the magnesium fluoride coating disposed thereon to a high temperature source for a predetermined time.

In certain example embodiments of this invention, a method of making a coated article is provided. A glass substrate having a textured surface is provided. A magnesium fluoride inclusive coating is disposed, directly or indirectly, on the textured surface of the glass substrate. The glass substrate having the magnesium fluoride coating disposed thereon is heat treated by exposing the glass substrate having the magnesium fluoride coating disposed thereon to a high temperature source for a predetermined time. The coated article, post heat treating, has a visible transmission increase of at least about 2% relative to visible transmission prior to the disposing of the magnesium fluoride inclusive coating.

In certain example embodiments of this invention, a coated article including a diffusion etched textured surface is provided. A magnesium fluoride inclusive coating is provided, directly or indirectly, on the textured surface of the coated article. The coated article and the coating are heat treated together such that a visible transmission increase of at least about 2% is achieved post heat treating. The features, aspects, advantages, and example embodiments described herein may be combined to realize yet further embodiments.

### Brief description of the drawings

These and other features and advantages will be better and more completely understood by reference to the following detailed description of exemplary illustrative embodiments in conjunction with the drawings, of which:
- Figure 1: is a glass substrate having a structured surface and an anti-reflective coating in accordance with an example embodiment of this invention;
- Figure 2: shows the surface roughness of an un-textured glass substrate;
- Figure 3: shows the surface roughness of a commercially available textured glass substrate;
- Figure 4: is a graph plotting visible transmission vs. wavelength for an example metal fluoride coating applied to an un-textured glass substrate compared to an uncoated un-textured glass substrate;
- Figure 5: is a graph plotting visible transmission vs. wavelength for an example magnesium fluoride coating applied to the smooth side of a textured glass substrate, compared to the example magnesium fluoride coating applied to the rough side of the textured glass substrate; and
- Figure 6: is a graph plotting visible transmission vs. wavelength for an uncoated un-textured float glass substrate, compared to an example magnesium fluoride coating applied to an un-textured float glass substrate, and another example magnesium fluoride coating applied to a textured glass surface.

### Detailed description of example Embodiments of the invention

Certain example embodiments of this invention relate to enhanced transmission of optical coatings on textured surfaces of substrates. The optical coatings of certain example embodiments comprise magnesium fluoride and organosilane based coatings, which may be disposed on substrates such as glass substrates. Advantageously, the magnesium fluoride coatings are temperable (e.g., at temperatures of about 580 degrees C, more preferably at least about 600 degrees C, and still more preferably at least about 625 degrees C), while the organosilane based coatings are low temperature heat treatable (e.g., at temperatures of about 250 degrees C). The surface of the glass substrate may be textured, e.g., using chemical agents. Surprisingly and unexpectedly, in certain example embodiments, an unusually high light transmission can be achieved through the use of the coatings on textured glass. The coatings and coated articles described herein may be used in a variety of applications including, for example, the production of photovoltaic (PV) devices, greenhouse applications, optical filters where high transmission is required with low reflection, etc.

One illustrative aspect of certain example embodiments of this invention advantageously enables an antiglare coating to be produced on a substrate (e.g., a glass substrate) that may be cured at a high temperature, which may be close to a temperature used to temper the substrate. In certain example embodiments, the substrate may be treated to reduce glare via several different physical phenomena. A first example physical phenomenon that may be taken advantage of is diffusion, which refers to the phenomenon by which the reflection of light that otherwise would be in the direction of the view is reduced by scattering the light in various directions. For example, diffusion etching treats a surface of the substrate to increase the diffusion effect.

A second example physical phenomenon that may be taken advantage of is antireflection (AR). AR glass uses the principal of destructive interference, which results when incident light is reflected from an anti-reflection surface of the glass. Trapping the light at particular wavelengths results can result in an actual reduction in the total light reflected. In certain example embodiments, as explained in greater detail below, the anti-reflection coating on a structured surface may be a dense and porous metal fluoride film. Such fluoride thin films may be deposited by physical techniques such as, for example, evaporation in high vacuum atmospheres, molecular beam epitaxy, etc. Conventionally, such techniques often are time consuming and expensive, and it often is difficult to control the microstructure and composition of the film using such techniques. Thus, certain example embodiments of this invention advantageously incorporate coatings and coating techniques that are inexpensive and easy to fabricate across a large area substrate. More particularly, as explained below, certain example embodiments relate to the formulation and manufacture of AR coatings based on magnesium fluoride on glass that can be used, for example, as a PV superstrate.

An organosilane based coating also may be used on a textured surface, and the organosilane based coating of certain example embodiments may be cured at a temperature of about 250 degrees C to enhance transmission.

In view of the above, by combining various surface structures on one piece of glass, the unique properties of low reflectance yet high clarity surprisingly and unexpectedly can be realized.

Certain example embodiments relate to diffusion etched glass produced using a combination of strong hydrofluoric acid and weak trifluoric acid and the formation of a composite coating comprising a complex of metal fluoride-porous silica for substrates (e.g., glass substrates) using a destructive interference approach. For example, a magnesium fluoride (e.g., MgF2 or other suitable stoichiometry) may be formed, for example, by any one of the techniques described below. The substrate may be standard clear glass or low iron glass substrates designed for high transmission.

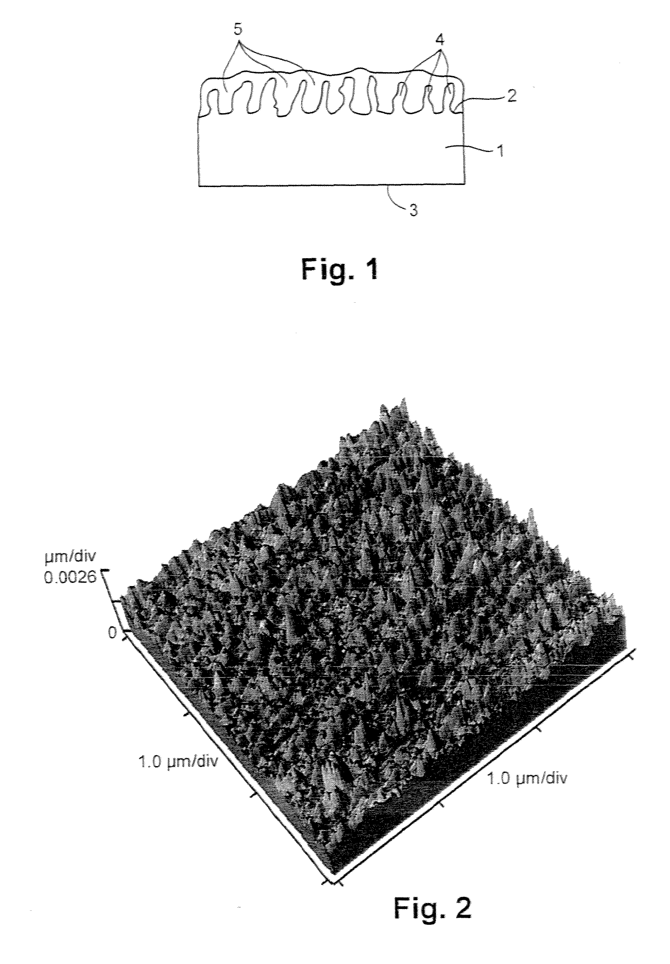

Referring now more particularly to the accompanying drawings in which like reference numerals indicate like parts throughout the several views, Fig. 1 is a glass substrate 1 having a structured surface and an anti-reflective coating in accordance with an example embodiment of this invention. More particularly, the glass substrate 1 has a top surface 2 and a bottom surface 3. The top surface 2 of the substrate 1 is diffusion etched 4, and an anti-reflective coating 5 (e.g., a metal fluoride AR coating) is provided on the diffusion etched surface 4 of the substrate 1. It will be appreciated that in certain example embodiment the bottom surface 3 (instead of the top surface 2) may be diffusion etched 4, and the anti-reflective coating 5 (e.g., a metal fluoride AR coating) may be provided on this diffusion etched surface 4 of the substrate 1. Furthermore, in certain example embodiments, both the top surface 2 and the bottom surface 3 may be diffusion etched 4 and/or both may have an anti-reflective coating 5 disposed thereon. The anti-reflective coating 5 may be generally conformal with respect to the diffusion etched surface 4 of the substrate 1 or, as shown in Fig. 1, it may generally flatten the diffusion etched surface 4 of the substrate 1.

The glass of certain example embodiments can be standard clear glass. In such case, after coating, similar transmission to that obtained with low iron glasses can be obtained. This advantageously results in manufacturing flexibility and/or provides cost advantages. The glass of certain example embodiments may be low iron glass (e.g., ExtraClear, UltraWhite, or Solar glass commercially available from the assignee of the instant application). In such cases, after coating, the glass may have an unusually high transmission. In either case, one example application of certain example embodiments involves the use of porous silica anti-reflective (AR) coatings for glass superstrates for PV manufacture.

The coating on the glass in certain example embodiments may be formed according to the following example procedure. Triacetic acid may be used to obtain a diffusion etched glass surface (although other etchants also may be used in certain example embodiments). Various metal fluorides and non-metal fluorides may be used as AR coatings on the diffusion etched glass to achieve a high clarity in the final product. For example, magnesium fluoride coatings may be used as the AR coating. Such magnesium fluoride coatings may result in 2% or percentage point transmission increases for textured glass, and 1.5% or percentage point transmission increases for un-textured glass. In certain example embodiments, calcium fluoride (e.g., CaF2 or other suitable stoichiometry) can be used in place of magnesium fluoride. In still further example embodiments, a mixture of calcium fluoride and magnesium fluoride may be used. For example, any combination from 1wt% to 99wt% of calcium fluoride may be used with 99wt% to 1wt% of magnesium fluoride. The transmission of an organosilicate optical coating on a textured surface may be increased by 0.5% to 4% as compared to when coated on an untextured surface.

Certain example embodiments described herein result in a number of example advantages that are surprising and unexpected. Furthermore, certain example embodiments described herein result in coated articles having superior properties. Magnesium fluoride coatings conventionally are not temperable or low temperature heat treatable. In other words, magnesium fluoride coatings cannot withstand the high temperatures associated with these techniques. Indeed, conventional magnesium fluoride coatings are damaged or destroyed by temperatures less than 250 degrees C, which is a temperature at which low temperature heat treatment or heat strengthening often is performed. Conventionally, many coatings breakdown at such harsh temperatures.

However, certain example embodiments surprisingly and unexpectedly overcome these problems typical of conventional metal fluoride and non-metal fluoride coatings. In this regard, the inventors of the instant invention have discovered, surprisingly and unexpectedly, that such conventional problems can be overcome by essentially embedding magnesium fluoride in a sol-gel that can be coated (e.g., spin coated) onto the substrate. The sol-gel may be a silicate or a fluorosilicate sol-gel. In certain example embodiments, the resulting magnesium fluoride coating produced from this sort of sol-gel surprisingly and unexpectedly can survive heat treatment of the underlying coated article. In other words, the resulting magnesium fluoride coating surprisingly and unexpectedly can be disposed on a substrate that can then be low temperature heat treated or heat strengthened (at temperatures up to about 250 degrees C) or thermally tempered (at temperatures of at least about 580 degrees C, more preferably at least about 600 degrees C, and still more preferably at least about 625 degrees C) without being significantly damaged or completely destroyed. The survivability of the magnesium fluoride coating on the coated article enables superior increases in visible transmission (light having a wavelength of from about 400-700 nm) to be realized. Superior increases in other wavelengths also may be realized, e.g., as shown in the examples and figures described below. The particular improvements to the visible transmission are described in greater detail below in connection with the examples disclosed herein.

### EXAMPLES

In view of the above-described techniques, a number of examples were prepared and tested. The examples generally tested two coating formulations (described in greater detail below), which were applied to un-textured and textured glass substrates. All of the examples prepared and tested resulted in an increase in percent visible transmission. The following table summarizes the results of the experiments:

| Example # | Coating | Substrate | Increase in %T |
|---|---|---|---|
| 1 | Coating 1 | Un-textured | 1.5 |
| 2 | Coating 1 | Textured | 2.0 |
| 3 | Coating 2 | Un-textured | 0.97 |
| 4 | Coating 2 | Textured | 4.6 |

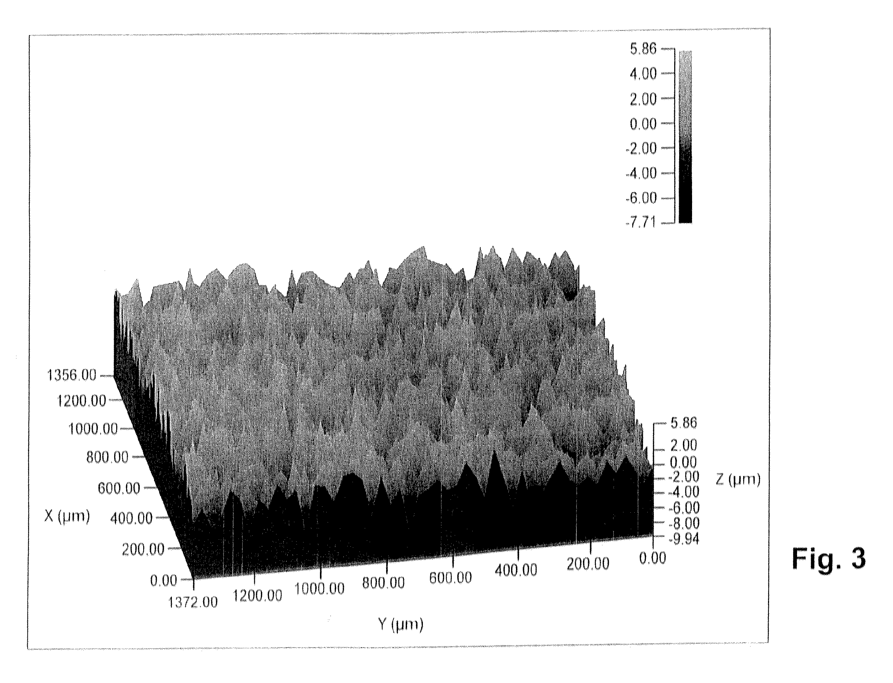

Figs. 2 and 3 show the surface roughness of the un-textured and textured glass substrates involved in the experiments. In particular, Fig. 2 shows the surface roughness of an un-textured glass substrate. The un-textured glass substrate shown in Fig. 2 is commonly known and commercially available float glass. Fig. 3 shows the surface roughness of a commercially available textured glass substrate. The textured glass substrate shown in Fig. 3 is commercially available satin deco glass. Because of the features of textured and un-textured glass substrates, two different techniques for the measurement of roughness were needed. AFM was used to measure roughness of the un-textured surface of the glass as shown in Fig. 2, which cannot be used to measure the roughness of textured surfaces of satin deco substrates because of instrumental limitations. On the other hand, a profilometer was used to measure the roughness of the textured glass surface as shown in Fig. 3, even though it was unable to measure the small roughness of the float glass. The following table indicates the average roughness of the untextured glass and the textured glass substrates:

| Glass | Commercial Source | Roughness (um) |
|---|---|---|
| Un-textured | Float Glass | 0.0026 |
| Textured | Satin Deco | 2.2 |

### EXAMPLE 1

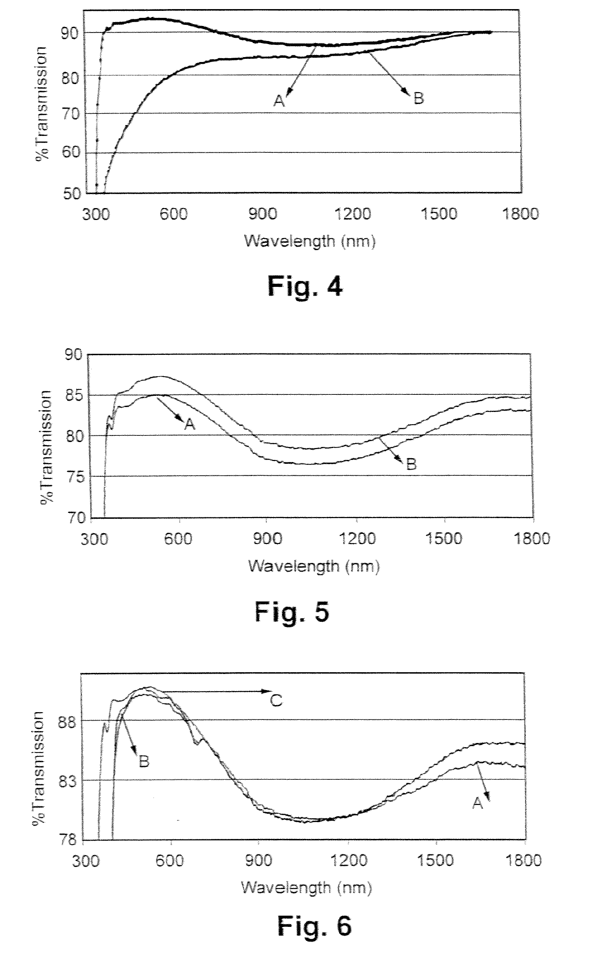

2.14 gm of magnesium acetate was dissolved in 15 mL of propanol-2. Then, 4 mL of trifluro acid (TFA) and 4 mL of deionized water was added. The solution was stirred for 2 hours. The experiment was performed on an un-textured substrate. The particular un-textured substrate was a commercially available float glass that was 3 mm thick having a roughness of 0.0026 um. This mixture is referred to herein as "Coating 1." The magnesium fluoride film was fabricated using a spin coating method with process conditions of 2650 rpm for 30 seconds. These films were heat treated or thermally tempered in a furnace at 625 degrees C for 3 ½ minutes. The optical spectra of uncoated-untextured glass and coated-untextured glass is shown in Fig. 4, and the increase in percent visible transmission is provided in the summary table above. More particularly, Fig. 4 is a graph plotting visible transmission vs. wavelength for an example metal fluoride coating applied to an un-textured glass substrate (A), compared to an uncoated untextured glass substrate (B). The increase in percent visible transmission for Example 1 is 1.5.

### EXAMPLE 2

Example 2 is similar to Example 1, except that the substrate is textured, e.g., is commercially available satin deco glass. Satin Deco glass has a roughness of 2.2 um on one side of the surface, as is shown in Fig. 3 above. In general, satin deco glass has peaks and valleys ranging from about -9.94 um to about 5.86 um, relative to the surface of the substrate. Fig. 5 is a graph plotting visible transmission vs. wavelength for an example magnesium fluoride coating applied to the smooth side of a textured glass substrate (A), compared to the example magnesium fluoride coating applied to the rough side of the textured glass substrate (B). The increase in percent visible transmission for Example 2 is 2.0.

### EXAMPLE 3

A coating formulation, which is referred to herein as Coating 2, was made as shown in the following table:

| Ingredient | Example (grams) | Range (grams) |
|---|---|---|
| n-Propanol | 31.91 | 20-50 |
| n-butanol | 12.82 | 0-15 |
| Acetone | 19.42 | 0-25 |
| BYK | 0.15 | 0-1 |
| Intermediate | 51.06 | 45-55 |
| Phenyl triethoxysilane | 0.61 | 0-3 |
| Methyl triethoxysilane | 0.55 | 0-3 |
| Tetraethoxysilane | 1.20 | 0-3 |
| Color Stock | 25.38 | 20-30 |
| Acetic Acid | 0.49 | 0-2 |
| Water | 6.40 | 0-10 |

In this example, a glass substrate that has an un-textured surface (e.g., commercially available float glass) was used. The solution was spun on the substrate using a spin coater operating at 1500 rpm for 30 seconds. The coated glass was kept in the oven at 250 degrees C for 5 minutes.

Fig. 6 is a graph plotting visible transmission vs. wavelength for an uncoated untextured float glass substrate (A), compared to an example magnesium fluoride coating applied to an un-textured float glass substrate (B). The increase in percent visible transmission for Example 3 is 0.97.

### EXAMPLE 4

Example 4 is similar to Example 3, except that the substrate is textured, e.g., is commercially available satin deco glass. As noted above, Satin Deco glass has a roughness of 2.2 um on one side of the surface, as is shown in Fig. 3 above and, in general, has peaks and valleys ranging from about -9.94 um to about 5.86 um, relative to the surface of the substrate. Fig. 6 also plots visible transmission vs. wavelength for another example magnesium fluoride coating applied to a textured glass surface (C), in addition to the uncoated un-textured float glass substrate (A) and the example magnesium fluoride coating of Example 3 applied to an untextured float glass substrate (B). The increase in percent visible transmission for Example 4 is 4.6.

It will be appreciated that the compositions described above in connection with Coating 1 and Coating 2 are provided by way of example. Certain example embodiments may use the exact formulations as those described herein, or similar formulations. In general, certain example embodiments may involve coatings having the following general compositions:

| Ingredient | Example Range |
|---|---|
| Magnesium acetate | 2 wt% to 10 wt% |
| Propanol | 40 mL to 80 mL |
| Trifluro Acid (TFA) | 10 mL to 20 mL |
| Deionized Water | 10 mL to 20 mL |

As noted above, the coatings and coated articles described herein may be used in a variety of applications including, for example, the production of photovoltaic (PV) devices, greenhouse applications, optical filters where high transmission is required with low reflection, etc. It will be appreciated that the example embodiments described herein may be used in connection with other applications in addition to, or in place of, the above.

While a particular layer or coating may be said to be "on" or "supported by" a surface or another coating (directly or indirectly), other layer(s) and/or coatings may be provided therebetween. Thus, for example, a coating may be considered "on" and "supported by" a surface even if other layer(s) are provided between layer(s) and the substrate. Moreover, certain layers or coatings may be removed in certain embodiments, while others may be added in other embodiments of this invention without departing from the overall spirit of certain embodiments of this invention. Thus, by way of example, an encapsulating coating applied in liquid sol-gel form in accordance with an example embodiment may be said to be "on" or "supported by" a sputtering target material, even though other coatings and/or layers may be provided between the sol-gel formed coating and the target material.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

### Further preferred embodiments of the invention:

1. A method of making a coated article, the method comprising:
   providing a glass substrate;
   diffusion etching, using an acid, at least one surface of the glass substrate so as to create a textured surface on the glass substrate;
   disposing a magnesium fluoride inclusive coating, directly or indirectly, on the textured surface of the glass substrate; and
   heat treating the glass substrate having the magnesium fluoride coating disposed thereon by exposing the glass substrate having the magnesium fluoride coating disposed thereon to a high temperature source for a predetermined time.
2. The method of embodiment 1, wherein the acid is a combination of hydrofluoric acid and trifluoric acid.
3. The method of embodiment 1, wherein the magnesium fluoride inclusive coating is disposed on the textured surface of the glass substrate via spin coating.
4. The method of embodiment 1, wherein the glass substrate having the magnesium fluoride inclusive coating disposed thereon is heat treated by thermally tempering at a temperature of at least about 580 degrees C.
5. The method of embodiment 4, wherein the coated article, post thermal tempering, has a visible transmission increase of at least about 2% relative to visible transmission prior to the disposing of the magnesium fluoride inclusive coating.
6. The method of embodiment 3, further comprising embedding a magnesium fluoride source in a silicate or a fluorosilicate sol-gel such that a complex of magnesium fluoride-porous silica is spin coated, directly or indirectly, onto the glass substrate.
7. The method of embodiment 6, wherein the glass substrate having the magnesium fluoride inclusive coating disposed thereon is heat strengthened by heat treating at a temperature of about 250 degrees C.
8. The method of embodiment 7, wherein the coated article, post heat treating, has a visible transmission increase of at least about 4% relative to visible transmission prior to the disposing of the magnesium fluoride inclusive coating.
9. The method of embodiment 1, wherein the magnesium fluoride inclusive coating includes at least 1% calcium fluoride by weight.
10. The method of embodiment 1, further comprising building the coated article into a photovoltaic device as a superstrate.
11. A method of making a coated article, the method comprising:
   providing a glass substrate having a textured surface;
   disposing a magnesium fluoride inclusive coating, directly or indirectly, on the textured surface of the glass substrate; and
   heat treating the glass substrate having the magnesium fluoride coating disposed thereon by exposing the glass substrate having the magnesium fluoride coating disposed thereon to a high temperature source for a predetermined time,
   wherein the coated article, post heat treating, has a visible transmission increase of at least about 2% relative to visible transmission prior to the disposing of the magnesium fluoride inclusive coating.
12. The method of embodiment 11, wherein the glass substrate having the magnesium fluoride inclusive coating disposed thereon is heat treated by thermally tempering at a temperature of at least about 580 degrees C.
13. The method of embodiment 11, further comprising embedding a magnesium fluoride source in a silicate or a fluorosilicate sol-gel,
   wherein said disposing is further practiced by spin coating the silicate or fluorosilicate sol-gel having the magnesium fluoride source embedded therein, directly or indirectly, on the textured surface of the glass substrate such that the magnesium fluoride coating comprises a complex of magnesium fluoride-porous silica.
14. The method of embodiment 13, wherein the glass substrate having the magnesium fluoride inclusive coating disposed thereon is heat strengthened by heat treating at a temperature of about 250 degrees C.
15. The method of embodiment 11, wherein the magnesium fluoride inclusive coating includes at least 1% calcium fluoride by weight.
16. A coated article, comprising:
   a diffusion etched textured surface; and
   a magnesium fluoride inclusive coating provided, directly or indirectly, on the textured surface of the coated article;
   wherein the coated article and the coating are heat treated together such that a visible transmission increase of at least about 2% is achieved post heat treating.
17. The coated article of embodiment 16, wherein the magnesium fluoride inclusive coating is a complex of magnesium fluoride-porous silica.
18. The coated article of embodiment 16, wherein the magnesium fluoride inclusive coating includes at least 1% calcium fluoride by weight.
19. A photovoltaic device comprising a superstrate including the coated article of embodiment 16.

## Claims

1. A method of making a coated article, the method comprising:
providing a glass substrate;
diffusion etching, using an acid, at least one surface of the glass substrate so as to create a textured surface on the glass substrate;
disposing a magnesium fluoride inclusive coating, directly or indirectly, on the textured surface of the glass substrate; and
heat treating the glass substrate having the magnesium fluoride coating disposed thereon by exposing the glass substrate having the magnesium fluoride coating disposed thereon to a high temperature source for a predetermined time.

2. The method of claim 1, wherein the acid is a combination of hydrofluoric acid and trifluoric acid.

3. The method of claim 1, wherein the magnesium fluoride inclusive coating is disposed on the textured surface of the glass substrate via spin coating.

4. The method of claim 1, wherein the glass substrate having the magnesium fluoride inclusive coating disposed thereon is heat treated by thermally tempering at a temperature of at least about 580 degrees C,
in particular wherein the coated article, post thermal tempering, has a visible transmission increase of at least about 2% relative to visible transmission prior to the disposing of the magnesium fluoride inclusive coating.

5. The method of claim 3, further comprising embedding a magnesium fluoride source in a silicate or a fluorosilicate sol-gel such that a complex of magnesium fluoride-porous silica is spin coated, directly or indirectly, onto the glass substrate.

6. The method of claim 1, wherein the magnesium fluoride inclusive coating includes at least 1% calcium fluoride by weight.

7. The method of claim 1, further comprising building the coated article into a photovoltaic device as a superstrate.

8. A method of making a coated article, the method comprising:
providing a glass substrate having a textured surface;
disposing a magnesium fluoride inclusive coating, directly or indirectly, on the textured surface of the glass substrate; and
heat treating the glass substrate having the magnesium fluoride coating disposed thereon by exposing the glass substrate having the magnesium fluoride coating disposed thereon to a high temperature source for a predetermined time,
wherein the coated article, post heat treating, has a visible transmission increase of at least about 2% relative to visible transmission prior to the disposing of the magnesium fluoride inclusive coating.

9. The method of claim 8, wherein the glass substrate having the magnesium fluoride inclusive coating disposed thereon is heat treated by thermally tempering at a temperature of at least about 580 degrees C.

10. The method of claim 8, further comprising embedding a magnesium fluoride source in a silicate or a fluorosilicate sol-gel,
wherein said disposing is further practiced by spin coating the silicate or fluorosilicate sol-gel having the magnesium fluoride source embedded therein, directly or indirectly, on the textured surface of the glass substrate such that the magnesium fluoride coating comprises a complex of magnesium fluoride-porous silica,
in particular wherein the glass substrate having the magnesium fluoride inclusive coating disposed thereon is heat strengthened by heat treating at a temperature of about 250 degrees C.

11. The method of claim 8, wherein the magnesium fluoride inclusive coating includes at least 1% calcium fluoride by weight.

12. A coated article, comprising:
a diffusion etched textured surface; and
a magnesium fluoride inclusive coating provided, directly or indirectly, on the textured surface of the coated article;
wherein the coated article and the coating are heat treated together such that a visible transmission increase of at least about 2% is achieved post heat treating.

13. The coated article of claim 12, wherein the magnesium fluoride inclusive coating is a complex of magnesium fluoride-porous silica.

14. The coated article of claim 12, wherein the magnesium fluoride inclusive coating includes at least 1% calcium fluoride by weight.

15. A photovoltaic device comprising a superstrate including the coated article of claim 12.
